# EUROPÄISCHE PATENTSCHRIFT

(11) **EP 2 745 458 B1**
(45) Veröffentlichungstag und Bekanntmachung des Hinweises auf die Patenterteilung: **06.01.2021**
(21) Anmeldenummer: 12813746.0
(22) Anmeldetag: 16.08.2012
(51) Int. Cl.: H04L 7/10, H04L 25/02

(54) **SCHALTUNGSANORDNUNG UND VERFAHREN ZUM UEBERTRAGEN VON SIGNALEN**
CIRCUIT ARRANGEMENT AND METHOD FOR TRANSMITTING SIGNALS
CIRCUITERIE ET PROCÉDÉ DE TRANSMISSION DE SIGNAUX

(30) Priorität: 16.08.2011 DE 102011052759
(43) Veröffentlichungstag der Anmeldung: 25.06.2014
(73) Patentinhaber: Silicon Line GmbH, 80687 München (DE)
(72) Erfinder: BLON, Thomas, 80687 Muenchen (DE); JANSEN, Florian, 80687 Muenchen (DE); HOELTKE, Holger, 80995 Muenchen (DE)
(74) Vertreter: Hofmann, Andreas
(86) Internationale Anmeldenummer: PCT/DE2012/200050
(87) Internationale Veröffentlichungsnummer: WO 2013/023652

(56) Entgegenhaltungen:
- US-A- 5 968 179
- "SL83014 by Silicon Line GmbH", , 3. März 2011 (2011-03-03), XP055057661, Gefunden im Internet: URL:http://www.silicon-line.com/SL83014.ht m [gefunden am 2013-03-25]
- "Snapshots of SL83014 by Silicon Line GmbH - *Evidence of publication prior to priority date*", , 3. März 2011 (2011-03-03), XP055057663, Gefunden im Internet: URL:http://www.silicon-line.com/SL83014.ht m [gefunden am 2013-03-25]
- "MIPI Alliance Specification for D-PHY", , 22. September 2009 (2009-09-22), Seiten 1-123, XP055057664, Gefunden im Internet: URL:http://www.mipi.org/specifications/phy sical-layer [gefunden am 2013-03-25]
- DARTNELL P ET AL: "Serdes Framer Interface Level 5 (SFI-5): Implementation Agreement for 40Gb/s Interface for Physical Layer Devices (OIF-SF15-01.01)", OPTICAL INTERNETWORKING FORUM (OIF), , 29. Januar 2002 (2002-01-29), Seite 62pp, XP009119852, Gefunden im Internet: URL:http://www.oiforum.com/public/document s/OIF-SFI5-01.0.pdf [gefunden am 2009-07-22]

## Beschreibung

### Technisches Gebiet

Die vorliegende Erfindung betrifft eine Schaltungsanordnung gemäß dem Oberbegriff des Anspruchs 1 sowie ein Verfahren gemäß dem Oberbegriff des Anspruchs 11.

### Stand der Technik, insbesondere dessen Nachteile und technische Probleme

Die Bitübertragungsschicht oder physikalische Schicht (PHY) ist die unterste Schicht im O[pen]S[ystems]I[nterconnection]-Schichtenmodell, das auch OSI-Referenzmodell genannt wird und ein Schichtenmodell der Internationalen Organisation für Normung (ISO) bezeichnet, das wiederum als Designgrundlage von Kommunikationsprotokollen in Rechnernetzen dient.

Die Physical Layer (PHY) ist für Combining, F[orward]E[rror]C[orrection], Modulation, Power Control, Spreading (C[ode]D[ivision]M[ultiple]A[ccess]) und dergleichen zuständig und kennt weder Daten noch Anwendungen, sondern nur Nullen und Einsen. PHY stellt der darüber liegenden Sicherungsschicht (D[ata]L[ink]L[ayer]), insbesondere einer Teilschicht namens M[edia]A[ccess]C[ontrol]-Layer, logische Kanäle zur Verfügung (Transportkanäle bei U[niversal]M[obile]T[elecommunications]S[ystem]).

D-PHY ermöglicht grundsätzlich eine flexible, kostengünstige und schnelle serielle Schnittstelle für Kommunikationsverbindungen zwischen Komponenten innerhalb einer mobilen Vorrichtung.

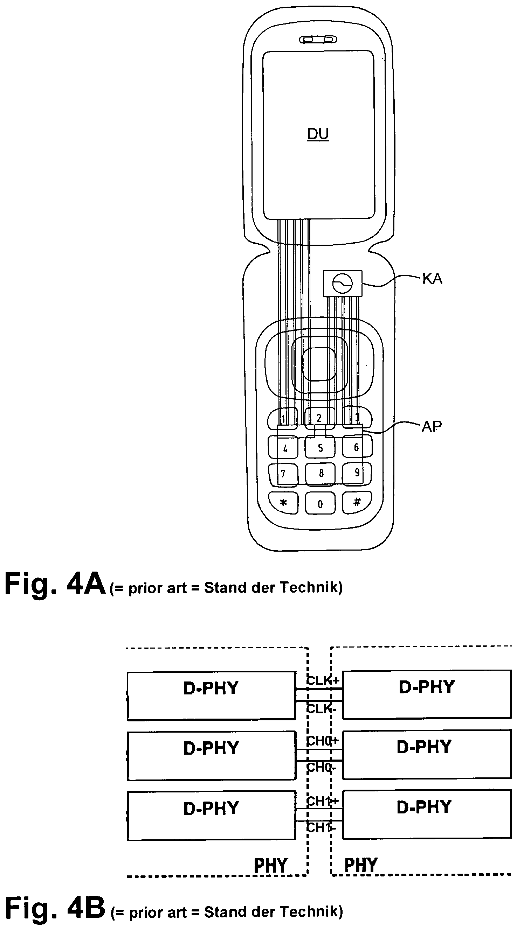

Wie anhand Fig. 4A veranschaulicht, stellt in modernen Mobiltelefonen eine Datenquelle, zum Beispiel ein Applikationsprozessor, am M[obile]I[ndustry]P[rocessor]I[nterface]-D[isplay]S[erial]I[nterface] Bilddaten als D-PHY-Signale für die Darstellung an einer angeschlossenen Datensenke, zum Beispiel an einem angeschlossenen Display, zur Verfügung. Auch kann eine Datensenke, zum Beispiel ein Applikationsprozessor, über ein MIPI-C[amera]S[erial]I[nterface] Bilddaten von einer angeschlossenen Datenquelle, zum Beispiel von einer angeschlossenen Kamera, im D-PHY-Format empfangen.

Ein auf dem D-PHY-Protokoll basierendes DSI oder DSI-2 oder CSI oder CSI-2 oder CSI-3 umfasst bis zu vier differentielle Datenleitungen und eine differentielle Taktleitung, die den Applikationsprozessor elektrisch mittels Kupferkabel mit dem Display und/oder mit der Kamera verbinden. Die Datenrate pro differentieller Datenleitung beträgt bis zu 1,5 Gbps (Gigabit pro Sekunde).

Dieses konventionelle Versenden und Empfangen der D-PHY-DSI- oder D-PHY-CSI-Signale über ein bis vier differentielle Datensignale und eine differentielle Taktleitung ist in der D-PHY-Schnittstellenkonfiguration der Fig. 4B anhand zweier Datenkanäle (= sogenannte data lanes CH0+, CH0- und CH1+, CH1-) und einer Taktleitung (= sogenannte clock lane CLK+, CLK-) zwischen den Modulen der Master-Seite (= Datenquelle, zum Beispiel Kamera und/oder Applikationsprozessor) und den Modulen der Slave-Seite (= Datensenke, zum Beispiel Applikationsprozessor und/oder Anzeigeeinheit) exemplarisch veranschaulicht.

Wie in diesem Zusammenhang aus Fig. 4A ersichtlich ist, werden pro angeschlossenem Display oder pro angeschlossener Kamera bis zu zehn Kupferleitungen zur Datenübertragung benötigt (zum Beispiel viermal zwei Datenleitungen und einmal zwei Taktleitungen).

Im Hinblick auf eine wünschenswerte Reduzierung der Leitungen ist hier eine serialisierte Signal-Übertragung in Erwägung zu ziehen. Eine derartige Serialisierung ist jedoch konventionellerweise durchaus fehleranfällig und nicht selten instabil.

In der vom 3. März 2011 datierenden Informationsschrift "World's first MIPI® D-PHY optical bridge IC for mobile phones" der Firma "Silicon Line GmbH", München, ist ein integrierter Baustein mit der Typenbezeichnung SL83014 angekündigt, ein Brückenschaltkreis, der auf Mobiltelefone abzielt, die den aktuellen D-PHY-Standard der MIPI®-Vereinigung nutzen. Der Schaltkreis soll dazu genutzt werden, Anzeigeschirme, Kameras und Anwendungsprozessoren optisch zu verbinden. Der Schaltkreis akzeptiert bis zu vier Datenpfade, sogenannte data lanes, sowie einen Taktpfad (clock lane) und serialisiert die Daten zur Übertragung über eine optische Hochgeschwindigkeitsverbindung. Sowohl sogenannte HS-(Hochgeschwindigkeit, von 80 Mbps bis 1 Gbps) als auch LP- (niedrige Leistung, bis zu 10 Mbps) Vorwärts-Datenübertragungs-Betriebsarten werden unterstützt. Der SL83014 schließt als optionales Merkmal eine galvanische Verbindung ein, die für eine bidirektionale LP-Datenübertragung genutzt werden kann.

### Darstellung der vorliegenden Erfindung: Aufgabe, Lösung, Vorteile

Die Erfindung ist in den angehängten Ansprüchen definiert. Soweit die folgenden Ausführungsbeispiele nicht unter den Schutzumfang der Ansprüche fallen, dienen sie lediglich der Veranschaulichung.

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Schaltungsanordnung der eingangs genannten Art sowie ein Verfahren der eingangs genannten Art so weiterzuentwickeln, dass eine serialisierte Signal-Übertragung stets fehlerfrei und stabil erfolgt.

Diese Aufgabe wird durch eine Schaltungsanordnung mit den Merkmalen des Anspruchs 1 sowie durch ein Verfahren mit den Merkmalen des Anspruchs 11 gelöst. Vorteilhafte Ausgestaltungen und zweckmäßige Weiterbildungen der vorliegenden Erfindung sind in den jeweiligen Unteransprüchen gekennzeichnet.

Erfindungsgemäß werden also eine Schaltungsanordnung sowie ein Verfahren vorgeschlagen, mittels derer
- die single-ended, auf Logikpegeln basierenden Signalen entsprechenden H[igh]S[peed]-Daten und
- die differentiellen, insbesondere auf common mode basierenden, Signalen entsprechenden L[ow]P[ower]-Daten zu einem gemeinsamen Signalstrom serialisiert werden. Werden die zum Beispiel ein bis vier Datenkanäle serialisiert übertragen, so ist eine fehlerfreie und stabile Übertragung nur möglich, wenn und solange ein Takt am Serialisierungselement oder Serialisierer anliegt.

Ein derartiger (Referenz-)Takt kann durch mindestens einen Taktgenerator, insbesondere durch mindestens eine Phase-Locked-Loop (PLL), zum Beispiel durch mindestens eine Clock Multiplier Unit (CMU), vorgegeben werden.

Hierbei ist das grundsätzliche Problem beim Hochfahren der seriellen Datenverbindung, dass sich der Taktgenerator in der Sendeanordnung auf den Referenztakt und danach eine C[lock/]D[ata]R[ecovery] oder Taktrückgewinnung in der Empfangsanordnung auf die Datenrate des gemeinsamen Signalstroms sowie auf die Frame-Positionen der Daten synchronisieren müssen.

Werden an das Serialisierungselement oder an den Serialisierer, insbesondere an dessen Multiplexer, Daten angelegt, bevor die gesamte Datenübertragungsstrecke vollständig synchronisiert ist, so gehen diese Daten verloren.

Die für die vollständige Synchronisation der Übertragungsstrecke erforderliche Zeit ist größenordnungsmäßig bekannt und unter Anderem von der Datenrate an der seriellen Schnittstelle abhängig. Es bestehen aber weitere Abhängigkeiten von Umgebungsbedingungen, wie etwa von der Betriebsspannung, von der Temperatur und auch von den Prozessparametern der verwendeten Halbleitertechnologie.

Damit die an der Sendeanordnung angelegten Datensignale, insbesondere die an der Sendeanordnung angelegten D-PHY-Daten, nicht verloren gehen, kann vorgesehen sein, dass die Datenquelle, insbesondere die D-PHY-Datenquelle, eine gewisse Mindestzeit nach Anlegen des Referenztaktes plus Sicherheitsmarge abwartet, bevor Daten angelegt werden.

Um jedoch beim Hochfahren der seriellen Übertragungsstrecke keinen Zeitverlust zu erleiden, teilt die Empfangsanordnung erfindungsgemäß der Sendeanordnung mit, wann die Empfangsanordnung, insbesondere vollständige, Synchronisation erreicht hat; diese Information wird dann der Datenquelle, insbesondere der D-PHY-Datenquelle, durch die Sendeanordnung zugänglich gemacht.

Erfindungsgemäß beginnt die Sendeanordnung erst nach Erhalt der Meldung der Synchronisation damit, die tatsächlich an der Sendeanordnung angelegten H[igh]S[peed]-Daten durchzuleiten, so dass eine fehlerfreie und stabile serielle Übertragung der Signale, insbesondere der D-PHY-Signale, gewährleistet ist, das heißt Datenverluste und Bitfehler beim Serialisieren der differentiellen Datenleitungen und der differentiellen Taktleitung des D[isplay]S[erial]I[nterface] und/oder des C[amera]S[erial]I[nterface] in zuverlässiger Weise vermieden werden.

Exemplarisch lässt sich die vorliegende Erfindung beim Synchronisieren mindestens einer seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, Übertragung sowohl von single-ended, auf Logikpegeln basierenden Daten- und Taktsignalen als auch von differentiellen, insbesondere auf common mode basierenden, Daten- und Taktsignalen, insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera und/oder mindestens einem Applikationsprozessor, und mindestens einer Datensenke, insbesondere mindestens einem Applikationsprozessor und/oder mindestens einer, zum Beispiel hochauflösenden und/oder zum Beispiel als Bildsenke fungierenden, Anzeigeeinheit, zum Beispiel mindestens einem Display oder mindestens einem Monitor, anwenden.

### Kurze Beschreibung der Zeichnungen

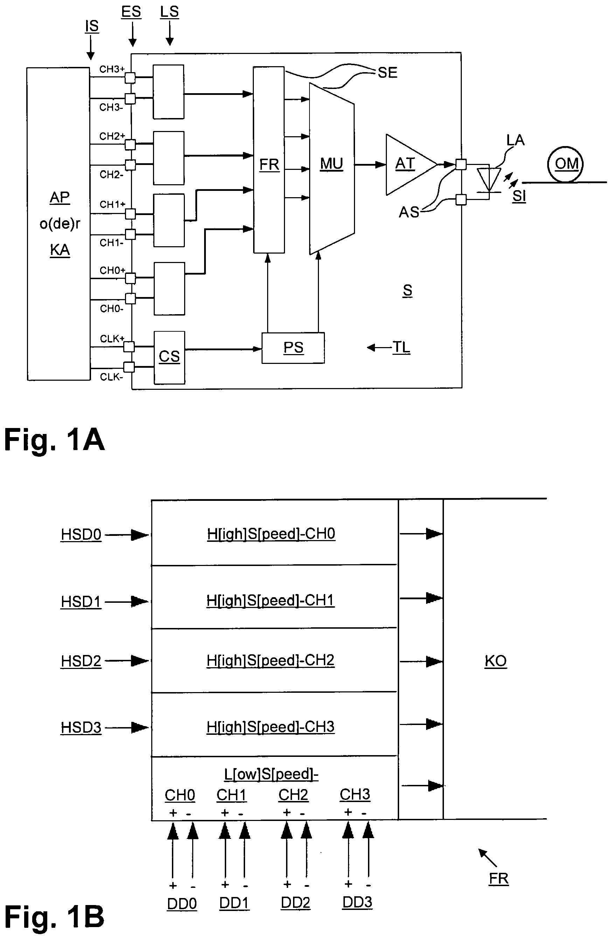

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 11 nachgeordneten Ansprüche verwiesen, andererseits werden weitere Ausgestaltungen, Merkmale und Vorteile der vorliegenden Erfindung nachstehend unter Anderem anhand der durch Fig. 1A bis Fig. 3 veranschaulichten Ausführungsbeispiele näher erläutert.

Es zeigt:
- Fig. 1A: in konzeptuell-schematischer Darstellung ein Ausführungsbeispiel der Sendeanordnung gemäß der vorliegenden Erfindung, die nach dem Verfahren gemäß der vorliegenden Erfindung arbeitet;
- Fig. 1B: in konzeptuell-schematischer Detaildarstellung ein Ausführungsbeispiel des Framers der Sendeanordnung aus Fig. 1A;
- Fig. 2A: in konzeptuell-schematischer Darstellung ein Ausführungsbeispiel der der Sendeanordnung aus Fig. 1A zugeordneten Empfangsanordnung, die nach dem Verfahren gemäß der vorliegenden Erfindung arbeitet;
- Fig. 2B: in konzeptuell-schematischer Detaildarstellung ein Ausführungsbeispiel des Deframers der Empfangsanordnung aus Fig. 2A;
- Fig. 3: in konzeptuell-schematischer Darstellung ein Ausführungsbeispiel der Schaltungsanordnung gemäß der vorliegenden Erfindung, die nach dem Verfahren gemäß der vorliegenden Erfindung arbeitet;
- Fig. 4A: in konzeptuell-schematischer Darstellung ein Beispiel einer Anordnung aus dem Stand der Technik; und
- Fig. 4B: in konzeptuell-schematischer Darstellung ein Beispiel einer der Anordnung aus Fig. 4A zugrunde liegenden Schnittstellenkonfiguration mit zwei Datenkanälen und mit einer Taktleitung.

Gleiche oder ähnliche Ausgestaltungen, Elemente oder Merkmale sind in Fig. 1A bis Fig. 4B mit identischen Bezugszeichen versehen.

### Bester Weg zur Ausführung der vorliegenden Erfindung

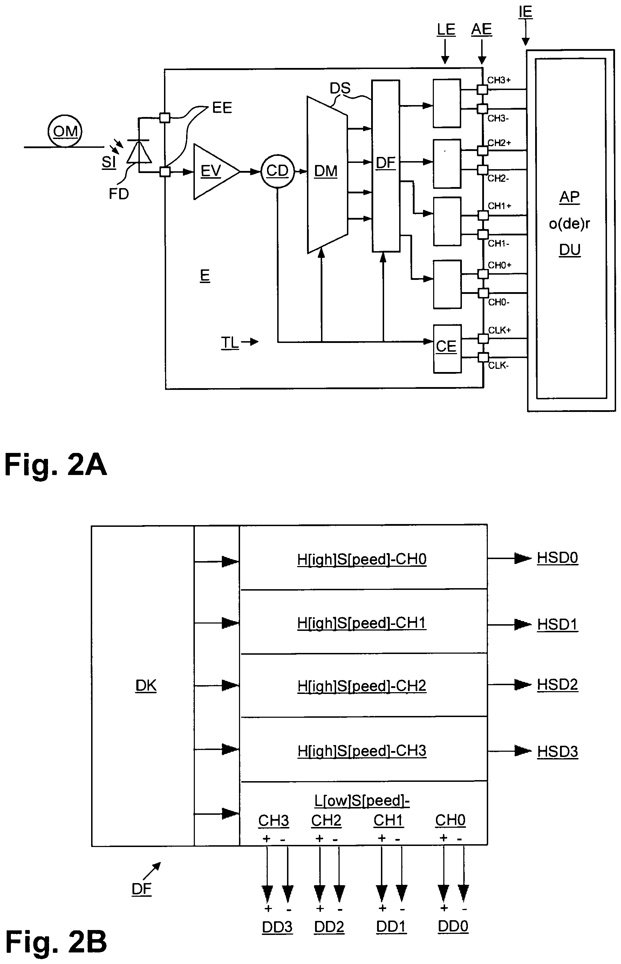

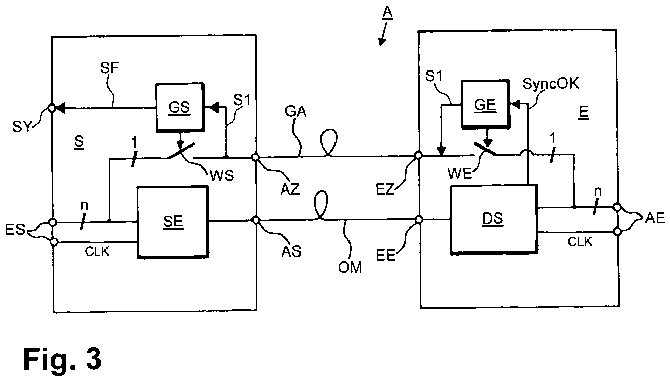

- Mittels des anhand Fig. 1A veranschaulichten Ausführungsbeispiels einer Sendeanordnung S gemäß der vorliegenden Erfindung und
- mittels des anhand Fig. 2A veranschaulichten Ausführungsbeispiels einer Empfangsanordnung E gemäß der vorliegenden Erfindung,
durch die zusammen ein Ausführungsbeispiel einer Schaltungsanordnung A (vgl. Fig. 3) gemäß der vorliegenden Erfindung gebildet wird (im Rahmen der vorliegenden Erfindung ist es möglich, die Sendeanordnung S und die Empfangsanordnung E unabhängig voneinander zu realisieren und zu betreiben), ist es grundsätzlich möglich, eine kabelbasierte Verbindung
- gemultiplext und mithin serialisiert auf optischer Basis, insbesondere auf Basis mindestens eines optischen Mediums, zum Beispiel auf Basis mindestens eines optischen Wellenleiters OM (vgl. hierzu im Detail Fig. 1A, Fig. 2A), wie etwa auf Basis mindestens einer Glasfaser und/oder auf Basis mindestens einer Plastikfaser, und/oder
- nicht gemultiplext auf elektrischer oder galvanischer Basis, insbesondere auf Basis mindestens einer elektrischen oder galvanischen Verbindung GA (vgl. Fig. 3), zum Beispiel auf Basis mindestens eines Kupferkabels und/oder auf Basis mindestens einer, etwa auf mindestens einer Leiterplatte angeordneten, elektrischen Leitung,
zu realisieren und zu betreiben.

Fig. 1A zeigt ein Ausführungsbeispiel für den prinzipiellen Aufbau einer Sendeanordnung S zum Anschluss an eine D[isplay]S[erial]I[nterface]-Datenübertragungsschnittstelle IS oder auch an eine C[amera]S[erial]I[nterface]-Datenübertragungsschnittstelle IS.

Die im Applikationsprozessor AP oder in der Kamera KA generierten Bilddaten werden auf vier Datenleitungen oder Kanälen CH0+, CH0-, CH1+, CH1-, CH2+, CH2-, CH3+, CH3- als D-PHY-Signale an der bis zu vier Bit breiten Datenübertragungsschnittstelle IS zusammen mit D-PHY-korrekten Taktsignalen CLK+, CLK- zur Verfügung gestellt.

Die Sendeanordnung S nimmt diese Signale an einer integrierten Interface-Logik LS auf, deren Blöcke jeweils mindestens einen Zustandsautomaten zur richtigen Interpretation der D-PHY-Logiksignale und zur Unterscheidung zwischen hochfrequenten Datenströmen (sogenannten H[igh]S[peed]-Daten) und niederfrequenten Datenströmen (sogenannten L[ow]S[peed]-Daten) aufweisen können.

Ein in der Sendeanordnung S folgender Framer FR (vgl. hierzu detaillierter Fig. 1B) stellt die D[irect]C[urrent]-Balancierung des Eingangssignals sicher und erzeugt einen auf der Empfangsseite (vgl. Fig. 2A) wiedererkennbaren Rahmen, der es der Empfangsanordnung E (vgl. Fig. 2A) ermöglicht, die empfangenen Daten den richtigen Ausgangsdatenleitungen oder Ausgangskanälen CH0+, CH0-, CH1+, CH1-, CH2+, CH2-, CH3+, CH3- wieder zuzuordnen.

Im Detail kann der Framer FR gemäß Fig. 1B sowohl mit den single-ended, auf Logikpegeln basierenden Datensignalen HSDO, HSD1, HSD2, HSD3 als auch mit den differentiellen Datensignalen DD0+, DD0-, DD1+, DD1-, DD2+, DD2-, DD3+, DD3- beaufschlagt werden. Mittels seines als 5b/6b-Kodierblock ausgebildeten Kodierers KO bettet der Framer FR gemäß Fig. 1B diese differentiellen Datensignale DD0+, DD0-, DD1+, DD1-, DD2+, DD2-, DD3+, DD3- in den Strom der single-ended, auf Logikpegeln basierenden Datensignale HSDO, HSD1, HSD2, HSD3 ein.

Ein sich dem Framer FR anschließender Multiplexer MU, insbesondere H[igh]S[peed]-Mux, erzeugt mit Hilfe eines als Phase-Locked-Loop, insbesondere als C[lock]M[ultiplier]U[nit], ausgebildeten Taktgenerators PS das hochfrequente serielle oder gebündelte Sendesignal, das dem Ausgang AS der Sendeanordnung S mittels eines Ausgangstreiber AT zur Verfügung gestellt wird. Der Framer FR und der Multiplexer MU bilden zusammen den Serialisierer SE.

Hierbei dient das über den Taktport CLK+, CLK- und über das Taktmodul CS der Interface-Logik LS mittels des Taktgenerators PS bereit gestellte D-PHY-Taktsignal als (Takt-)Referenz für den Serialisierer SE, insbesondere für dessen Multiplexer MU, und wird im seriellen Datenstrom, also im serialisierten Ausgangssignal eingebettet. Hierdurch entsteht der gemeinsame Signalstrom SI, der an die Empfangsanordnung E (vgl. Fig. 2A) übermittelt wird.

Wie der Darstellung gemäß Fig. 1A des Weiteren entnehmbar ist, ist der Ausgangstreiber AT als integrierter Lasertreiber zur Ansteuerung mindestens eines direkt angeschlossenen Lasers LA, insbesondere zur Ansteuerung mindestens einer direkt angeschlossener V[ertical]C[avity]S[urface]E[mitting]L[aserdiode], ausgeführt.

Fig. 2A zeigt ein Ausführungsbeispiel für den prinzipiellen Aufbau der Empfangsanordnung E zum Anschluss an eine D[isplay]S[erial]I[nterface]-Datenübertragungsschnittstelle IE oder auch an eine C[amera]S[erial]I[nterface]-Datenübertragungsschnittstelle IE.

Die von der Sendeanordnung S (vgl. Fig. 1A) ausgesandten seriellen oder gebündelten Daten werden über einen Eingangsverstärker EV der Empfangsanordnung E aufgenommen und einer integrierten Takt- und Datenrückgewinnung CD zugeführt.

Diese integrierte Takt- und Datenrückgewinnung CD regeneriert aus dem gemeinsamen Signalstrom SI den ursprünglichen D-PHY-Takt, der über das Taktmodul CE der Interface-Logik LE direkt dem D[isplay]S[erial]I[nterface] oder dem C[amera]S[erial]I[nterface] wieder zur Verfügung gestellt wird. Der verbleibende serielle Datenstrom wird über einen Demultiplexer DM entbündelt sowie parallelisiert und an einen Deframer DF (vgl. hierzu detaillierter Fig. 2B) übergeben, der grundsätzlich spiegelbildlich zum Framer FR gemäß Fig. 1B aufgebaut ist. Der Demultiplexer DM und der Deframer DF bilden zusammen den Deserialisierer DS.

Im Detail kann der Deframer FR gemäß Fig. 2B mittels seines als 6b/5b-Dekodierblock ausgebildeten Dekodierers DK die differentiellen Datensignale DD0+, DD0-, DD1+, DD1-, DD2+, DD2-, DD3+, DD3- von den single-ended, auf Logikpegeln basierenden Datensignalen HSD0, HSD1, HSD2, HSD3 separieren und die reparallelisierten Datensignale den jeweils zutreffenden Datenleitungen CH0+, CH0-, CH1+, CH1-, CH2+, CH2-, CH3+, CH3- wieder zuordnen.

Die in der Empfangsanordnung E dargestellten Interface-Logik-Blöcke LE können jeweils mindestens einen Zustandsautomaten zur richtigen Interpretation der D-PHY-Logiksignale und zur Unterscheidung zwischen hochfrequenten Datenströmen und niederfrequenten Datenströmen aufweisen.

Wie der Darstellung gemäß Fig. 2A des Weiteren entnehmbar ist, ist der Eingangsverstärker EV als integrierter Transimpedanzverstärker ausgeführt, der es ermöglicht, eine Fotodiode FD direkt an die Empfangsanordnung E anzuschließen.

Auf diese Weise ist es bei der Schaltungsanordnung A (vgl. Fig. 3) gemäß der vorliegenden Erfindung möglich, die kabelbasierte gemultiplexte Verbindung zwischen der Sendeanordnung S (vgl. Fig. 1A) und der Empfangsanordnung E (vgl. Fig. 2A) auf optischer Basis, nämlich mittels eines, zum Beispiel in Form einer Glasfaser und/oder in Form einer Plastikfaser ausgebildeten, optischen Wellenleiters OM zu realisieren und zu betreiben.

Fig. 3 stellt ein Ausführungsbeispiel für die Zusammenschau der Sendeanordnung S (vgl. Fig. 1A) und der Empfangsanordnung E (vgl. Fig. 2A) dar. Es handelt sich um eine D-PHY-Übertragungsstrecke mit serieller Verbindung bzw. mit serialisiertem Datenstrom.

Hierzu werden die D-PHY-H[igh]S[peed]/L[ow]P[ower]-Daten durch die im Wesentlichen den Serialisierer SE, und hierbei insbesondere den Multiplexer MU, aufweisende Sendeanordnung S (vgl. Fig. 1A) gebündelt und als serieller Datenstrom an die Empfangsanordnung E (vgl. Fig. 2A) übertragen.

Diese im Wesentlichen den Deserialisierer DS, und hierbei insbesondere den Demultiplexer DM, aufweisende Empfangsanordnung E (vgl. Fig. 2A) entbündelt die seriellen Daten und gibt sie in ursprünglicher Form wieder als D-PHY-H[igh]S[peed]/L[ow]P[ower]-Daten aus. Der an der Sendeanordnung S (vgl. Fig. 1A) anliegende D-PHY-CL[oc]K dient als Taktreferenz für den Serialisierer SE und wird im seriellen Datenstrom eingebettet. Die Empfangsanordnung E (vgl. Fig. 2A) regeneriert diesen Takt und gibt ihn als D-PHY-CL[oc]K wieder aus.

Sollen nun vorübergehend oder auch dauerhaft auf nur einer der n D-PHY-Verbindungen oder D-PHY-Lanes ausschließlich L[ow]P[ower]-Daten übertragen werden, so können die entsprechenden Eingänge ES der Sendeanordnung S (vgl. Fig. 1A) durch mindestens einen, insbesondere von mindestens einem Logikmodul GS beaufschlagten, Schalter WS (in Fig. 1A lediglich aus Gründen der Übersichtlichkeit der Darstellung nicht gezeigt) mit einem anderen oder weiteren Anschluss AZ der Sendeanordnung S (vgl. Fig. 1A) verbunden werden.

In entsprechender Weise können die Ausgänge AE der Empfangsanordnung E (vgl. Fig. 2A) durch mindestens einen, insbesondere von mindestens einem Logikmodul GE beaufschlagten, Schalter WE (in Fig. 2A lediglich aus Gründen der Übersichtlichkeit der Darstellung nicht gezeigt) mit einem anderen oder weiteren Anschluss EZ der Empfangsanordnung E (vgl. Fig. 2A) verbunden werden.

Dieser sendeseitige Anschluss AZ und dieser empfangsseitige Anschluss EZ werden untereinander mittels mindestens einer elektrischen oder galvanischen Verbindung GA, insbesondere mittels mindestens eines ein Bit breiten Kupferkabels oder mittels mindestens einer, zum Beispiel auf mindestens einer Leiterplatte angeordneten, elektrischen Leitung, verbunden.

Diese elektrische oder galvanische Verbindung GA zwischen dem sendeseitigen Anschluss AZ und dem empfangsseitigen Anschluss EZ wird während des Hochfahrens der seriellen Übertragungsstrecke auf beiden Seiten mittels des sendeseitigen Schalters WS bzw. mittels des empfangsseitigen Schalters WS geöffnet, um auf das grundsätzliche Problem beim Hochfahren der seriellen Datenverbindung Bezug zu nehmen, wonach sich der Taktgenerator PS in der Sendeanordnung S (vgl. Fig. 1A) auf den Referenztakt und danach eine C[lock/]D[ata]R[ecovery] oder Taktrückgewinnung CD in der Empfangsanordnung E (vgl. Fig. 2A) auf die Datenrate des seriellen Datenstroms sowie auf die Frame-Positionen der Daten synchronisieren müssen.

Werden an den Serialisierer SE, insbesondere an dessen Multiplexer MU, Daten angelegt, bevor die gesamte Datenübertragungsstrecke vollständig synchronisiert ist, so gehen diese Daten verloren.

Um derartige Verluste zu vermeiden, signalisiert der im empfangsseitigen Deserialisierer DS enthaltene Demultiplexer DM das Erreichen der vollständigen Synchronisation mit dem Signal SyncOK an das empfangsseitige Logikmodul oder die Block-Logik GE.

Diese empfangsseitige Block-Logik GE sendet eine Signatur S1 über die elektrische oder galvanische Verbindung GA an das Logikmodul oder die Block-Logik GS in der Sendeanordnung S oder im Sendebaustein.

Diese sendeseitige Block-Logik GS wiederum gibt ein Fertig-Signal SF am Synchronisationsanschluss SY des Sendebausteins S aus.

Dieser Synchronisationsanschluss SY kann von der Datenquelle, insbesondere von der D-PHY-Datenquelle, gelesen werden. Sobald die Datenquelle auf diese Weise den Zustand des Erreichens der vollständigen Synchronisation erkennt, kann die Datenquelle über den Eingang ES des Sendebausteins S sofort Daten, insbesondere D-PHY-Daten, an den Sendebaustein S anlegen.

Mit oder unmittelbar nach Erkennen des Erreichens des Synchronisationszustands wird also damit begonnen, die tatsächlich an der Sendeanordnung S (vgl. Fig. 1A) angelegten H[igh]S[peed]-Daten durchzuleiten, so dass eine fehlerfreie und stabile serielle Übertragung der D-PHY-Signale gewährleistet ist, das heißt Datenverluste und Bitfehler beim Serialisieren der differentiellen Datenleitungen und der differentiellen Taktleitung des D[isplay]S[erial]I[nterface] und/oder des C[amera]S[erial]I[nterface] in zuverlässiger Weise vermieden werden.

### Bezugszeichenliste

- A: Schaltungsanordnung
- E: Empfangsanordnung
- S: Sendeanordnung
- AE: Ausgang der Empfangsanordnung E
- AP: Applikationsprozessor
- AS: Ausgang der Sendeanordnung S
- AT: Ausgangstreiber, insbesondere Lasertreiber
- AZ: anderer oder weiterer oder zusätzlicher Ausgang der Sendeanordnung S
- CD: Takt- und Datenrückgewinnungseinheit
- CE: Taktmodul der Empfangs-Schnittstellen-Logik LE
- CH0±: erste Datenleitung oder erster Kanal
- CH1±: zweite Datenleitung oder zweiter Kanal
- CH2±: dritte Datenleitung oder dritter Kanal
- CH3±: vierte Datenleitung oder vierter Kanal
- CLK±: Taktleitung oder Taktkanal
- CS: Taktmodul der Sende-Schnittstellen-Logik LS
- DD0±: differentielles, insbesondere auf common mode basierendes, Datensignal auf erster Datenleitung oder erstem Kanal CH0±
- DD1±: differentielles, insbesondere auf common mode basierendes, Datensignal auf zweiter Datenleitung oder zweitem Kanal CH1±
- DD2±: differentielles, insbesondere auf common mode basierendes, Datensignal auf dritter Datenleitung oder drittem Kanal CH2±
- DD3±: differentielles, insbesondere auf common mode basierendes, Datensignal auf vierter Datenleitung oder viertem Kanal CH3±
- DF: Deframer
- DK: Dekodierer, insbesondere 6b/5b-Dekodierblock, des Deframers DF
- DM: Demultiplexer
- DS: Deserialisierungselement oder Deserialisierer
- DU: Anzeigeeinheit
- EE: Eingang der Empfangsanordnung E
- ES: Eingang der Sendeanordnung S
- EV: Eingangsverstärker, insbesondere Transimpedanzverstärker
- EZ: anderer oder weiterer oder zusätzlicher Eingang der Empfangsanordnung E
- FD: Fotodiode
- FR: Framer
- GA: elektrische oder galvanische Verbindung, insbesondere Kupferkabel oder, zum Beispiel auf Leiterplatte angeordnete, elektrische Leitung
- GE: Logikmodul der Empfangsanordnung E
- GS: Logikmodul der Sendeanordnung S
- HSD0: single-ended, auf Logikpegeln basierendes Datensignal auf erster Datenleitung oder erstem Kanal CH0±
- HSD1: single-ended, auf Logikpegeln basierendes Datensignal auf zweiter Datenleitung oder zweitem Kanal CH1±
- HSD2: single-ended, auf Logikpegeln basierendes Datensignal auf dritter Datenleitung oder drittem Kanal CH2±
- HSD3: single-ended, auf Logikpegeln basierendes Datensignal auf vierter Datenleitung oder viertem Kanal CH3±
- IE: datensenkenbezogene CSI- und/oder CSI-2- und/oder CSI-3- und/oder DSI- und/oder DSI-2-Schnittstelle
- IS: datenquellenbezogene CSI- und/oder CSI-2- und/oder CSI-3- und/oder DSI- und/oder DSI-2-Schnittstelle
- KA: Kamera
- KO: Kodierer, insbesondere 5b/6b-Kodierblock, des Framers FR
- LA: Laser
- LE: Empfangs-Schnittstellen-Logik
- LS: Sende-Schnittstellen-Logik
- MU: Multiplexer
- OM: optisches Medium, insbesondere optischer Wellenleiter, zum Beispiel Glasfaser und/oder Plastikfaser
- PS: Taktgenerator, insbesondere Phase-Locked-Loop, zum Beispiel Clock Multiplier Unit
- S1: Signatur
- SE: Serialisierungselement oder Serialisierer
- SF: Fertig-Signal
- SI: gemeinsamer Signalstrom
- SY: Synchronisationsanschluss der Sendeanordnung S
- SyncOK: Signal des Erreichens der Synchronisation
- TL: Taktleitung
- WE: Schalter der Empfangsanordnung E
- WS: Schalter der Sendeanordnung S

## Patentansprüche

1. Schaltungsanordnung (A) zum Übertragen
- sowohl von single-ended, auf Logikpegeln basierenden Daten- und Taktsignalen
- als auch von differentiellen, auf common mode basierenden, Daten- und Taktsignalen in Form mindestens eines serialisierten gemeinsamen Signalstroms (SI) zwischen mindestens einer mindestens einer Datenquelle zuordbaren Sendeanordnung (S) und mindestens einer mindestens einer Datensenke zuordbaren Empfangsanordnung (E), **dadurch gekennzeichnet,**
- **dass** das zwischen der Sendeanordnung (S) und der Empfangsanordnung (E) erfolgte Erreichen des Zustands der Synchronisation durch die Empfangsanordnung (E) an die Sendeanordnung (S) mitteilbar oder signalisierbar ist und
- **dass** die Sendeanordnung (S) einen von der Datenquelle lesbaren Synchronisationsanschluss (SY) aufweist, mittels dessen die Datenquelle das Erreichen des Zustands der Synchronisation erkennt,
wobei die Sendeanordnung (S) erst nach Erhalt der Mitteilung oder des Signals des Erreichens des Zustands der Synchronisation beginnt, die an mindestens einem Eingang (ES) der Sendeanordnung (S) anliegenden Datensignale durchzuleiten.

2. Schaltungsanordnung gemäß Anspruch 1, **dadurch gekennzeichnet, dass** die Sendeanordnung (S) aufweist:
- den mindestens einen Eingang (ES) für die Datensignale und Taktsignale,
- mindestens eine dem Eingang (ES) nachgeschaltete Sende-Schnittstellen-Logik (LS) zum Aufnehmen der Datensignale und Taktsignale,
- mindestens einen der Sende-Schnittstellen-Logik (LS) nachgeschalteten Serialisierer (SE) zum Erzeugen des gemeinsamen Signalstroms (SI),
- mindestens einen mindestens einem Taktmodul (CS) der Sende-Schnittstellen-Logik (LS) nachgeschalteten, dem Serialisierer (SE) vorgeschalteten und zum Erzeugen mindestens eines Referenztakts vorgesehenen Taktgenerator (PS), insbesondere Phase-Locked-Loop, zum Beispiel Clock Multiplier Unit,
- mindestens einen dem Serialisierer (SE) nachgeschalteten Ausgangstreiber (AT) und
- mindestens einen dem Ausgangstreiber (AT) nachgeschalteten Ausgang (AS) zum Übertragen des gemeinsamen Signalstroms (SI) an die Empfangsanordnung (E).

3. Schaltungsanordnung gemäß Anspruch 2, **dadurch gekennzeichnet, dass** der Serialisierer (SE) aufweist:
- mindestens einen der Sende-Schnittstellen-Logik (LS) nachgeschalteten Framer (FR) zum Erzeugen mindestens eines in der Empfangsanordnung (E) wiedererkennbaren Rahmens für den gemeinsamen Signalstrom (SI) sowie
- mindestens einen dem Framer (FR) nachgeschalteten Multiplexer (MU) zum Erzeugen des gemeinsamen Signalstroms (SI).

4. Schaltungsanordnung gemäß Anspruch 3, **dadurch gekennzeichnet, dass** der Framer (FR) sowohl mit den single-ended, auf Logikpegeln basierenden Datensignalen (HSD0, HSD1, HSD2, HSD3) als auch mit den differentiellen Datensignalen (DD0+, DD0-, DD1+, DD1-, DD2+, DD2-, DD3+, DD3-) beaufschlagbar ist und mittels mindestens eines Kodierers (KO), insbesondere mittels mindestens eines 5b/6b-Kodierblocks, die differentiellen Datensignale (DD0+, DD0-, DD1+, DD1-, DD2+, DD2-, DD3+, DD3-) in den Strom der single-ended, auf Logikpegeln basierenden Datensignale (HSD0, HSD1, HSD2, HSD3) einbettet.

5. Schaltungsanordnung gemäß mindestens einem der Ansprüche 1 bis 4, **dadurch gekennzeichnet, dass** die Empfangsanordnung (E) aufweist:
- mindestens einen Eingang (EE) für den von der Sendeanordnung (S) übertragenen gemeinsamen Signalstrom (SI),
- mindestens einen Eingangsverstärker (EV) zum Aufnehmen des gemeinsamen Signalstroms (SI),
- mindestens eine Takt- und Datenrückgewinnungseinheit (CD) zum Wiederherstellen der Datensignale und Taktsignale aus dem gemeinsamen Signalstrom (SI),
- mindestens ein der Takt- und Datenrückgewinnungseinheit (CD) nachgeschaltetes Taktmodul (CE) mindestens einer Empfangs-Schnittstellen-Logik (LE),
- mindestens einen der Takt- und Datenrückgewinnungseinheit (CD) nachgeschalteten Deserialisierer (DS) zum Reparallelisieren der Datensignale und zum Zuordnen der reparallelisierten Datensignale auf die Empfangs-Schnittstellen-Logik (LE) und
- mindestens einen der Empfangs-Schnittstellen-Logik (LE) nachgeschalteten Ausgang (AE) für die Datensignale und Taktsignale.

6. Schaltungsanordnung gemäß Anspruch 5, **dadurch gekennzeichnet, dass** der Deserialisierer (DS) aufweist:
- mindestens einen der Takt- und Datenrückgewinnungseinheit (CD) nachgeschalteten Demultiplexer (DM) zum Reparallelisieren der Datensignale sowie
- mindestens einen dem Demultiplexer (DM) nachgeschalteten Deframer (DF) zum Zuordnen der reparallelisierten Datensignale auf die Empfangs-Schnittstellen-Logik (LE).

7. Schaltungsanordnung gemäß Anspruch 6, **dadurch gekennzeichnet, dass** der Deframer (DF) mittels mindestens eines Dekodierers (DK), insbesondere mittels mindestens eines 6b/5b-Dekodierblocks, die differentiellen Datensignale (DD0+, DD0-, DD1+, DD1-, DD2+, DD2-, DD3+, DD3-) von den single-ended, auf Logikpegeln basierenden Datensignalen (HSD0, HSD1, HSD2, HSD3) separiert und die reparallelisierten Datensignale den jeweiligen Datenleitungen (CH0+, CH0-, CH1+, CH1-, CH2+, CH2-, CH3+, CH3-) zuordnet.

8. Schaltungsanordnung gemäß mindestens einem der Ansprüche 1 bis 7, **dadurch gekennzeichnet, dass** der gemeinsame Signalstrom (SI) zwischen der Sendeanordnung (S) und der Empfangsanordnung (E)
- über mindestens ein optisches Medium (OM), insbesondere über mindestens einen optischen Wellenleiter, zum Beispiel über mindestens eine Glasfaser und/oder über mindestens eine Plastikfaser, und/oder
- über mindestens eine elektrische oder galvanische, insbesondere ein Bit breite, Verbindung (GA), insbesondere über mindestens ein Kupferkabel und/oder über mindestens eine, zum Beispiel auf mindestens einer Leiterplatte angeordnete, elektrische Leitung,
übertragbar ist.

9. Schaltungsanordnung gemäß Anspruch 8, **dadurch gekennzeichnet, dass** der elektrischen oder galvanischen Verbindung (GA)
- in der Sendeanordnung (S) mindestens ein, insbesondere mit mindestens einem Logikmodul (GS) versehener, Schalter (WS) zugeordnet ist, mittels dessen die elektrische oder galvanische Verbindung (GA) zur Empfangsanordnung (E) schließbar ist, und
- in der Empfangsanordnung (E) mindestens ein, insbesondere mit mindestens einem Logikmodul (GE) versehener, Schalter (WE) zugeordnet ist, mittels dessen die elektrische oder galvanische Verbindung (GA) zur Sendeanordnung (S) schließbar ist.

10. Schaltungsanordnung gemäß Anspruch 5 oder 6 und gemäß Anspruch 8 oder 9, **dadurch gekennzeichnet, dass** das erfolgte Erreichen des Zustands der Synchronisation durch den Deserialisierer (DS), insbesondere durch den Demultiplexer (DM), über das Logikmodul (GE) des der Empfangsanordnung (E) zugeordneten Schalters (WE), über die elektrische oder galvanische Verbindung (GA) und über das Logikmodul (GS) des der Sendeanordnung (S) zugeordneten Schalters (WS) dem Eingang (ES) der Sendeanordnung (S) mitteilbar oder signalisierbar ist.

11. Verfahren zum Übertragen
- sowohl von single-ended, auf Logikpegeln basierenden Daten- und Taktsignalen
- als auch von differentiellen, auf common mode basierenden, Daten- und Taktsignalen in Form mindestens eines serialisierten gemeinsamen Signalstroms (SI) zwischen mindestens einer mindestens einer Datenquelle zuordbaren Sendeanordnung (S) und mindestens einer mindestens einer Datensenke zuordbaren Empfangsanordnung (E), **dadurch gekennzeichnet,**
- **dass** das zwischen der Sendeanordnung (S) und der Empfangsanordnung (E) erfolgte Erreichen des Zustands der Synchronisation durch die Empfangsanordnung (E) an die Sendeanordnung (S) mitgeteilt oder signalisiert wird und
- **dass** die Datenquelle das Erreichen des Zustands der Synchronisation mittels eines von der Datenquelle lesbaren Synchronisationsanschluss (SY) der Sendeanordnung (S) erkennt,
wobei die Sendeanordnung (S) erst nach Erhalt der Mitteilung oder des Signals des Erreichens des Zustands der Synchronisation beginnt, die an mindestens einem Eingang (ES) der Sendeanordnung (S) anliegenden Datensignale durchzuleiten.

12. Verfahren gemäß Anspruch 11, **dadurch gekennzeichnet, dass** sich
- die Sendeanordnung (S) auf den Referenztakt und
- die Empfangsanordnung (E) auf die Datenrate des gemeinsamen Signalstroms (SI) sowie auf mindestens eine Position des Rahmens des gemeinsamen Signalstroms (SI) synchronisieren.

13. Verfahren gemäß Anspruch 11 oder 12 und/oder Verwendung mindestens einer Schaltungsanordnung (A) gemäß mindestens einem der Ansprüche 1 bis 10 beim Synchronisieren mindestens einer seriellen und/oder gebündelten, insbesondere CSI-protokollbasierten und/oder CSI-2-protokollbasierten und/oder CSI-3-protokollbasierten und/oder DSI-protokollbasierten und/oder DSI-2-protokollbasierten, Übertragung sowohl von single-ended, auf Logikpegeln basierenden Daten- und Taktsignalen als auch von differentiellen, insbesondere auf common mode basierenden, Daten- und Taktsignalen, insbesondere von D-PHY-Datensignalen und D-PHY-Taktsignalen, zum Beispiel von bis zu vier Bit breiten MIPI-D-PHY-Datensignalen und MIPI-D-PHY-Taktsignalen, zwischen mindestens einer Datenquelle, insbesondere mindestens einer, zum Beispiel hochauflösenden und/oder zum Beispiel als Bildquelle fungierenden, Kamera (KA) und/oder mindestens einem Applikationsprozessor (AP), und mindestens einer Datensenke, insbesondere mindestens einem Applikationsprozessor (AP) und/oder mindestens einer, zum Beispiel hochauflösenden und/oder zum Beispiel als Bildsenke fungierenden, Anzeigeeinheit (DU), zum Beispiel mindestens einem Display oder mindestens einem Monitor.

## Claims

1. A circuit arrangement (A) for transmitting
- single-ended logic-level-based data signals and clock signals as well as
- differential common-mode-based data signals and clock signals
in the form of at least one serialized common signal stream (SI) between at least one sending arrangement (S) assignable to at least one data source and at least one receiving arrangement (E) assignable to at least one data sink,
**characterized in**
- **that** the fact of reaching the state of synchronization between the sending arrangement (S) and the receiving arrangement (E) can be communicated or signalled by the receiving arrangement (E) to the sending arrangement (S), and
- **that** the sending arrangement (S) comprises a synchronization port (SY) readable by the data source, by means of which synchronization port (SY) the data source recognizes the reaching of the state of synchronization,
wherein the sending arrangement (S) does not start to pass through the data signals present at at least one input (ES) of the sending arrangement (S) until the notification or the signal has been received that the state of synchronization has been reached.

2. The circuit arrangement according to claim 1, **characterized in that** the sending arrangement (S) comprises:
- the at least one input (ES) for the data signals and clock signals,
- at least one sending interface logic (LS) connected downstream of the input (ES) for picking up the data signals and clock signals,
- at least one serializer (SE) connected downstream of the sending interface logic (LS) for generating the common signal stream (SI),
- at least one clock generator (PS), in particular phase-locked loop, for example clock multiplier unit, connected downstream of at least one clock module (CS) of the sending interface logic (LS), connected upstream of the serializer (SE) and provided for generating at least one reference clock,
- at least one output driver (AT) connected downstream of the serializer (SE), and
- at least one output (AS) connected downstream of the output driver (AT) for transmitting the common signal stream (SI) to the receiving arrangement (E).

3. The circuit arrangement according to claim 2, **characterized in that** the serializer (SE) comprises:
- at least one framer (FR) connected downstream of the sending interface logic (LS) for generating at least one frame recognizable in the receiving arrangement (E) for the common signal stream (SI) as well as
- at least one multiplexer (MU) connected downstream of the framer (FR) for generating the common signal stream (SI).

4. The circuit arrangement according to claim 3, **characterized in that** the framer (FR) is providable with the single-ended, logic-level-based data signals (HSD0, HSD1, HSD2, HSD3) as well as with the differential data signals (DD0+, DD0-, DD1+, DD1-, DD2+, DD2-, DD3+, DD3-) and that the framer, by means of at least one coder (KO), in particular by means of at least one 5b/6b coder block, embeds the differential data signals (DD0+, DD0-, DD1+, DD1-, DD2+, DD2-, DD3+, DD3-) in the stream of the single-ended, logic-level-based data signals (HSD0, HSD1, HSD2, HSD3).

5. The circuit arrangement according to at least one of claims 1 to 4, **characterized in that** the receiving arrangement (E) comprises:
- at least one input (EE) for the common signal stream (SI) transmitted by the sending arrangement (S),
- at least one input amplifier (EV) for picking up the common signal stream (SI),
- at least one clock and data recovery unit (CD) for recovering the data signals and clock signals from the common signal stream (SI),
- at least one clock module (CE) of at least one receiving interface logic (LE), said clock module (CE) connected downstream of the clock and data recovery unit (CD),
- at least one deserializer (DS) connected downstream of the clock and data recovery unit (CD) for re-parallelizing the data signals and for assigning the re-parallelized data signals to the receiving interface logic (LE), and
- at least one output (AE) connected downstream of the receiving interface logic (LE) for the data signals and clock signals.

6. The circuit arrangement according to claim 5, **characterized in that** the deserializer (DS) comprises:
- at least one demultiplexer (DM) connected downstream of the clock and data recovery unit (CD) for re-parallelizing the data signals as well as
- at least one deframer (DF) connected downstream of the demultiplexer (DM) for assigning the re-parallelized data signals to the receiving interface logic (LE).

7. The circuit arrangement according to claim 6, **characterized in that** the deframer (DF) separates the differential data signals (DD0+, DD0-, DD1+, DD1-, DD2+, DD2-, DD3+, DD3-) from the single-ended, logic-level-based data signals (HSD0, HSD1, HSD2, HSD3) by means of at least one decoder (DK), in particular by means of at least one 6b/5b decoder block, and assigns the re-parallelized data signals to the respective data lines (CH0+, CH0-, CH1+, CH1-, CH2+, CH2-, CH3+, CH3-).

8. The circuit arrangement according to at least one of claims 1 to 7, **characterized in that** the common signal stream (SI) is transmittable between the sending arrangement (S) and the receiving arrangement (E)
- via at least one optical medium (OM), in particular via at least one optical waveguide, for example via at least one glass fibre and/or via at least one plastic fibre, and/or
- via at least one electrical or galvanic link (GA), in particular of one bit width, in particular via at least one copper cable and/or via at least one electrical line, for example provided on at least one printed circuit board.

9. The circuit arrangement according to claim 8, **characterized in that** the electrical or galvanic link (GA) has assigned to it,
- in the sending arrangement (S), at least one switch (WS), in particular provided with at least one logic module (GS), for closing the electrical or galvanic link (GA) to the receiving arrangement (E), and
- in the receiving arrangement (E), at least one switch (WE), in particular provided with at least one logic module (GE), for closing the electrical or galvanic link (GA) to the sending arrangement (S).

10. The circuit arrangement according to claim 5 or 6 and according to claim 8 or 9, **characterized in that** the fact of reaching the state of synchronization can be communicated or signalled by the deserializer (DS), in particular by the demultiplexer (DM), via the logic module (GE) of the switch (WE) assigned to the receiving arrangement (E), via the electrical or galvanic link (GA) and via the logic module (GS) of the switch (WS) assigned to the sending arrangement (S) to the input (ES) of the sending arrangement (S).

11. A method for transmitting
- single-ended logic-level-based data signals and clock signals as well as
- differential common-mode-based data signals and clock signals
in the form of at least one serialized common signal stream (SI) between at least one sending arrangement (S) assignable to at least one data source and at least one receiving arrangement (E) assignable to at least one data sink,
**characterized in**
- **that** the fact of reaching the state of synchronization between the sending arrangement (S) and the receiving arrangement (E) is communicated or signalled by the receiving arrangement (E) to the sending arrangement (S), and
- **that** the data source recognizes the reaching of the state of synchronization by means of a synchronization port (SY) of the sending arrangement (S), said synchronization port (SY) being readable by the data source,
wherein the sending arrangement (S) does not start to pass through the data signals present at at least one input (ES) of the sending arrangement (S) until the notification or the signal has been received that the state of synchronization has been reached.

12. The method according to claim 11, **characterized in that**
- the sending arrangement (S) synchronizes itself with the reference clock, and
- the receiving arrangement (E) synchronizes itself with the data rate of the common signal stream (SI) as well as with at least one position of the frame of the common signal stream (SI).

13. The method according to claim 11 or 12 and/or use of at least one circuit arrangement (A) according to at least one of claims 1 to 10 during synchronization of at least one serial and/or bundled, in particular CSI protocol-based and/or CSI-2 protocol-based and/or CSI-3 protocol-based and/or DSI protocol-based and/or DSI-2 protocol-based, transmission of single-ended logic-level-based data signals and clock signals as well as of differential, in particular common-mode-based data signals and clock signals, in particular of D-PHY data signals and D-PHY clock signals, for example of up to four bit-wide MIPI-D-PHY data signals and MIPI-D-PHY clock signals, between at least one data source, in particular at least one camera (KA), for example of high resolution and/or for example acting as an image source, and/or at least one application processor (AP), and at least one data sink, in particular at least one application processor (AP) and/or at least one display unit (DU), for example of high resolution and/or for example acting as an image sink, for example at least one display or at least one monitor.

## Revendications

1. Dispositif de circuit (A) pour transmettre
- des signaux de données et d'horloge asymétriques basés sur des niveaux logiques ainsi que
- des signaux de données et d'horloge différentielles basés sur le mode commun sous la forme d'au moins un flux de signaux (SI) commun sérialisé entre au moins un dispositif d'émission (S) et au moins un dispositif de réception (E), le dispositif d'émission (S) pouvant être alloué à au moins une source de données et le dispositif de réception (E) pouvant être alloué à au moins un collecteur de données,
**caractérisé en ce**
- **que** l'état de synchronisation atteint entre le dispositif d'émission (S) et le dispositif de réception (E) peut être communiqué ou signalé au dispositif d'émission (S) par le dispositif de réception (E), et
- **que** le dispositif d'émission (S) comporte une connexion de synchronisation (SY) lisible par la source de données et au moyen de laquelle la source de données détecte quand l'état de synchronisation est atteint,
où le dispositif d'émission (S) ne commence à passer par les signaux de données présents à au moins une entrée (ES) du dispositif d'émission (S) qu'après avoir reçu le message ou le signal d'atteinte de l'état de synchronisation.

2. Dispositif de circuit selon la revendication 1, **caractérisé en ce que** le dispositif d'émission (S) comporte :
- l'au moins une entrée (ES) pour les signaux de données et signaux d'horloge,
- au moins une logique d'interface d'émission (LS), connectée en aval de l'entrée (ES), pour recevoir les signaux de données et signaux d'horloge,
- au moins un sérialiseur (SE), connecté en aval de la logique d'interface d'émission (LS), pour générer le flux de signaux (SI) commun,
- au moins un générateur d'horloge (PS), en particulier phase-locked loop, par exemple clock multiplier unit, connecté en aval d'au moins un module d'horloge (CS) de la logique d'interface d'émission (LS), connecté en amont du sérialiseur (SE) et prévu pour générer au moins une horloge de référence,
- au moins un pilote de sortie (AT), connecté en aval du sérialiseur (SE), et
- au moins une sortie (AS), connectée en aval du pilote de sortie (AT), pour transmettre le flux de signaux (SI) commun au dispositif de réception (E).

3. Dispositif de circuit selon la revendication 2, **caractérisé en ce que** le sérialiseur (SE) comporte :
- au moins un encadreur (FR), connecté en aval de la logique d'interface d'émission (LS), pour générer au moins un cadre pour le flux de signaux (SI) commun reconnaissable dans le dispositif de réception (E) ainsi que
- au moins un multiplexeur (MU), connecté en aval du encadreur (FR), pour générer le flux de signaux (SI) commun.

4. Dispositif de circuit selon la revendication 3, **caractérisé en ce que** l'encadreur (FR) peut être chargé avec les signaux de données (HSD0, HSD1, HSD2, HSD3) asymétriques basés sur des niveaux logiques ainsi qu'avec les signaux de données (DD0+, DD0-, DD1+, DD1-, DD2+, DD2-, DD3+, DD3-) différentielles et que l'encadreur (FR) intègre les signaux de données (DD0+, DD0-, DD1+, DD1-, DD2+, DD2-, DD3+, DD3-) différentielles dans le flux de signaux de données (HSD0, HSD1, HSD2, HSD3) asymétriques basés sur des niveaux logiques au moyen d'au moins un codeur (KO), en particulier au moyen d'au moins un bloc de codage 5b/6b.

5. Dispositif de circuit selon au moins l'une des revendications 1 à 4, **caractérisé en ce que** le dispositif de réception (E) comporte :
- au moins une entrée (EE) pour le flux de signaux (SI) commun transmis par le dispositif d'émission (S),
- au moins un amplificateur d'entrée (EV) pour recevoir le flux de signaux (SI) commun,
- au moins une unité de récupération d'horloge et de données (CD) pour restituer les signaux de données et signaux d'horloge du flux de signaux (SI) commun,
- au moins un module d'horloge (CE) d'au moins une logique d'interface de reception (LE), lequel module d'horloge (CE) connecté en aval de l'unité de récupération d'horloge et de données (CD),
- au moins un désérialiseur (DS), connecté en aval de l'unité de récupération d'horloge et de données (CD), pour reparalléliser les signaux de données et pour allouer les signaux de données reparallallisés à la logique d'interface de reception (LE) et
- au moins une sortie (AE), connectée en aval de la logique d'interface de reception (LE), pour les signaux de données et d'horloge.

6. Dispositif de circuit selon la revendication 5, **caractérisé en ce que** le désérialiseur (DS) comporte :
- au moins un démultiplexeur (DM), connecté en aval de l'unité de récupération d'horloge et de données (CD), pour reparalléliser les signaux de données et
- au moins un décadreur (DF), connecté en aval du démultiplexeur (DM), pour allouer les signaux de données reparallélisés à la logique d'interface de reception (LE).

7. Dispositif de circuit selon la revendication 6, **caractérisé en ce que** le décadreur (DF) sépare les signaux de données (DD0+, DD0-, DD1+, DD1-, DD2+, DD2-, DD3+, DD3-) différentielles des signaux de données (HSD0, HSD1, HSD2, HSD3) asymétriques basés sur des niveaux logiques au moyen d'au moins un décodeur (DK), en particulier au moyen d'au moins un bloc de décodage 6b/5b, et que le décadreur (DF) alloue les signaux de données reparallélisés aux lignes de données (CH0+, CH0-, CH1+, CH1-, CH2+, CH2-, CH3+, CH3-) respectives.

8. Dispositif de circuit selon au moins l'une des revendications 1 à 7, **caractérisé en ce que** le flux de signaux (SI) commun est transférable entre le dispositif d'émission (S) et le dispositif de réception (E)
- par au moins un support optique (OM), en particulier par au moins un guide d'ondes optique, par exemple par au moins une fibre de verre et/ou par au moins une fibre plastique, et/ou
- par au moins une connexion (GA) électrique ou galvanique, en particulier avec un bit de largeur, en particulier par au moins un câble en cuivre et/ou par au moins une ligne électrique, par exemple disposée sur au moins une carte de circuit imprimé.

9. Dispositif de circuit selon la revendication 8, **caractérisé en ce que**
- dans le dispositif d'émission (S) au moins un commutateur (WS), en particulier muni d'au moins un module logique (GS), est alloué à la connexion (GA) électrique ou galvanique, la connexion (GA) électrique ou galvanique étant fermable au dispositif de réception (E) au moyen du commutateur (WS), et
- dans le dispositif de réception (E) au moins un commutateur (WE), en particulier muni d'au moins un module logique (GE), est alloué à la connexion (GA) électrique ou galvanique, la connexion (GA) électrique ou galvanique étant fermable au dispositif d'émission (S) au moyen du commutateur (WE).

10. Dispositif de circuit selon la revendication 5 ou 6 et selon la revendication 8 ou 9, **caractérisé en ce que** l'état de synchronisation atteint peut être communiqué ou signalé à l'entrée (ES) du dispositif d'émission (S) par le désérialiseur (DS), en particulier par le démultiplexeur (DM), par le module logique (GE) du commutateur (WE) alloué au dispositif de réception (E), par la connexion (GA) électrique ou galvanique et par le module logique (GS) du commutateur (WS) alloué au dispositif d'émission (S).

11. Procédé de transmission
- des signaux de données et d'horloge asymétriques basés sur des niveaux logiques ainsi que
- des signaux de données et d'horloge différentielles basés sur le mode commun sous la forme d'au moins un flux de signaux (SI) commun sérialisé entre au moins un dispositif d'émission (S) et au moins un dispositif de réception (E), le dispositif d'émission (S) pouvant être alloué à au moins une source de données et le dispositif de réception (E) pouvant être alloué à au moins un collecteur de données,
**caractérisé en ce**
- **que** l'état de synchronisation atteint entre le dispositif d'émission (S) et le dispositif de réception (E) est communiqué ou signalé au dispositif d'émission (S) par le dispositif de réception (E), et
- **que** la source de données détecte quand l'état de synchronisation est atteint au moyen d'une connexion de synchronisation (SY) du dispositif d'émission (S), laquelle connexion de synchronisation (SY) étant lisible par la source de données,
où le dispositif d'émission (S) ne commence à passer par les signaux de données présents à au moins une entrée (ES) du dispositif d'émission (S) qu'après avoir reçu le message ou le signal d'atteinte de l'état de synchronisation.

12. Procédé selon la revendication 11, **caractérisé en ce que**
- le dispositif d'émission (S) se synchronise sur l'horloge de référence et
- le dispositif de réception (E) se synchronise sur le débit de données du flux de signaux (SI) commun et sur au moins une position du cadre du flux de signaux (SI) commun.

13. Procédé selon la revendication 11 ou 12 et/ou utilisation d'au moins un dispositif de circuit (A) selon au moins l'une des revendications 1 à 10 lors de la synchronisation d'au moins une transmission série et/ou groupée, en particulier basée sur le protocole CSI et/ou basée sur le protocole CSI-2 et/ou basée sur le protocole CSI-3 et/ou basée sur le protocole DSI et/ou basée sur le protocole DSI-2, de signaux de données et d'horloge asymétriques basés sur des niveaux logiques ainsi que de signaux de données et d'horloge différentielles, en particulier basés sur le mode commun, en particulier de signaux de données D-PHY et signaux d'horloge D-PHY, par exemple de signaux de données MIPI-D-PHY et signaux d'horloge MIPI-D-PHY jusqu'à quatre bits de largeur, entre au moins une source de données, en particulier au moins une caméra (KA), par exemple à haute résolution et/ou par exemple dans la fonction d'une source d'image, et/ou au moins un processeur d'application (AP), et au moins un collecteur de données, en particulier au moins un processeur d'application (AP) et/ou au moins une unité d'affichage (DU), par exemple à haute résolution et/ou par exemple dans la fonction d'un collecteur d'image, par exemple au moins un écran ou au moins un moniteur.
